Europäisches Patentamt

European Patent Office

Office européen des brevets

(11) Veröffentlichungsnummer: **0 179 995**
**B1**

(12) # EUROPÄISCHE PATENTSCHRIFT

(45) Veröffentlichungstag der Patentschrift:
08.03.89

(51) Int. Cl.⁴: **F 16 J 15/10**

(21) Anmeldenummer: **85110062.8**

(22) Anmeldetag: **10.08.85**

(54) **Dichtung.**

(30) Priorität: **12.09.84 DE 3433376**

(73) Patentinhaber: **KSA Dichtsysteme GmbH & Co. KG, Steinbeisstrasse 46, D-7143 Vaihingen an der Enz (DE)**

(43) Veröffentlichungstag der Anmeldung:
**07.05.86 Patentblatt 86/19**

(72) Erfinder: **Abele, Berthold Wilhelm, Am Schalkstein 21, D-7121 Walheim (DE)**

(45) Bekanntmachung des Hinweises auf die Patenterteilung:
**08.03.89 Patentblatt 89/10**

(74) Vertreter: **Kohl, Karl- Heinz, Patentanwälte Dipl.- Ing. A.K. Jackisch- Kohl Dipl.- Ing. K.H. Kohl Stuttgarter Strasse 115, D-7000 Stuttgart 30 (DE)**

(84) Benannte Vertragsstaaten:
**AT CH DE FR GB IT LI SE**

(56) Entgegenhaltungen:
**EP-A-0 041 906**
**DE-A-2 831 217**
**DE-A-3 001 599**
**DE-A-3 001 730**
**GB-A-2 019 507**
**US-A-2 191 044**
**US-A-4 026 565**

EP 0 179 995 B1

## Beschreibung

Die Erfindung betrifft eine Flachdichtung nach dem Oberbegriff des Anspruches 1.

Diese bekannte Flachdichtung (DE-A-3 001 599) hat einen metallenen Träger, dessen Flüssigkeitsdurchgänge durch anvulkanisierte Elastomerdichtteile in der Einbaulage abgedichtet sind. Der Elastomerdichtteil hat einen im Querschnitt verjüngten Teil, der den Anschlußbereich des Elastomerdichtteiles an den Träger mit dem eigentlichen Dichtteil verbindet. Er hat parallel zueinander und zu den Stirnseiten des Trägers liegende Stirnseiten, die in der Einbaulage an den abzudichtenden Teilen flächig anliegen. Die ebenen Stirnseiten des Elastomerdichtteiles erfordern verhältnismäßig hohe Kräfte zum elastischen Zusammendrücken des Elastomerdichtteiles, weil er bereits vom ersten Augenblick des Pressens an nahezu über seine gesamte radiale Breite zusammengedrückt werden muß. Dadurch ist auch der Rückstelleffekt des Elastomerdichtteiles nicht übermäßig groß. Darüber hinaus führt der metallische Träger zu Dröhngeräuschen im Betrieb.

Bei einer anderen bekannten Flachdichtung (DE-A-2 831 217) ist der Elastomerdichtteil über einen Zwischenträger am Träger befestigt.

Es sind ferner Flachdichtungen bekannt, deren Elastomerdichtteil trapezförmigen Querschnitt hat (DE-A-3 001 730) oder im Querschnitt kreisförmig ausgebildet ist (US-A-4 026 565).

Bei einer anderen bekannten Flachdichtung (GB-A-2 019 507) hat der Elastomerdichtteil ovalen Querschnitt.

Es sind schließlich Flachdichtungen bekannt (US-A-2 191 044), bei denen die Elastomerdichtteile um einen Steg eines Trägers geschlungen oder zwischen plattenförmigen Teilen angeordnet sind.

Der Erfindung liegt die Aufgabe zugrunde, die gattungsgemäße Flachdichtung so auszubilden, daß sie einen problemlosen Einbau ermöglicht und auch nach längerer Einsatzdauer eine einwandfreie Abdichtung gewährleistet.

Diese Aufgabe wird bei der gattungsgemäßen Flachdichtung erfindungsgemäß mit den kennzeichnenden Merkmalen des Anspruches 1 gelöst.

Bei der erfindungsgemäßen Flachdichtung werden infolge der Schrägflächen spitz zulaufende Dichtlippen gebildet, die über die beiden Stirnseiten des Trägers ragen. Da sich die einen Schrägflächen unmittelbar vom Träger aus schräg nach außen erstrecken, die ihrerseits dann an die entgegengesetzt geneigten anderen Schrägflächen anschließen, ist der Elastomerdichtteil verhältnismäßig kompakt ausgebildet und weist keine verschwächten Abschnitte auf. Dadurch ist eine lange Lebensdauer des Elastomerdichtteiles sichergestellt. Beim elastischen Zusammendrücken wird der Elastomerdichtteil nicht über seine gesamte radiale Breite zusammengedrückt, sondern nur an den Dichtlippen. Da sie spitz zulaufen, ist zunächst eine verhältnismäßig geringe Verformungskraft notwendig, um den Elastomerdichtteil elastisch zusammenzudrücken. Mit zunehmender Preßkraft wird der Elastomerdichtteil mehr und mehr über seine gesamte radiale Breite zusammengedrückt, bis die gegeneinander abzudichtenden Teile auf den Stirnseiten des Trägers fest aufliegen. Die elastisch zusammengedrückten Dichtlippen haben eine hohes Rückformungsvermögen, so daß auch dann noch eine einwandfrei Abdichtung sichergestellt ist, wenn sich die abzudichtenden Bauteile geringfügig gelockert haben sollten. Da der Träger aus Kunststoff besteht, werden durch die Flachdichtung in der Einbaulage keine Dröhngeräusche erzeugt oder Schwingungen verstärkt, so daß die erfindungsgemäße Flachdichtung im Einsatz problemlos ist.

Die Erfindung wird im folgenden näher beschrieben. Es zeigen:

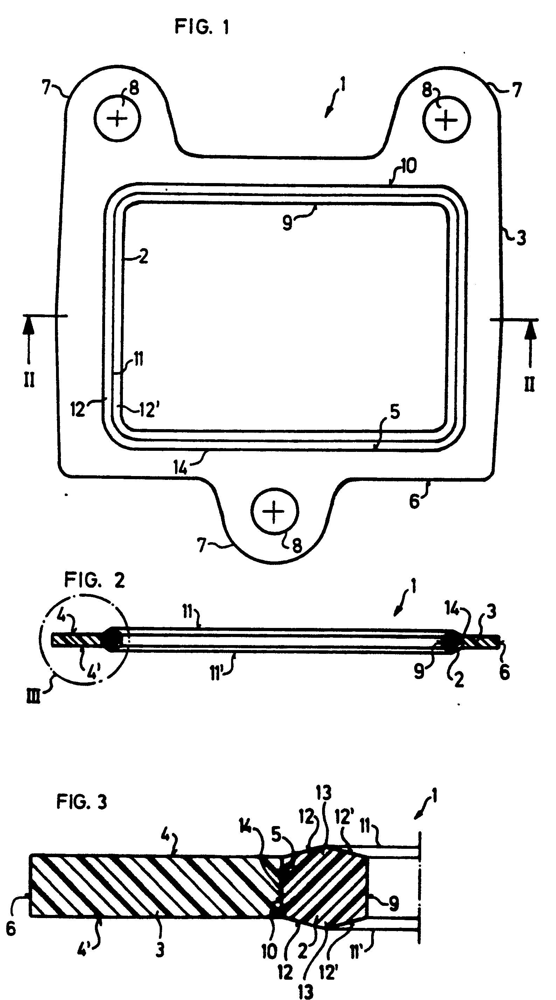

Fig. 1   eine Draufsicht auf eine erfindungsgemäße Dichtung,

Fig. 2   eine geschnittene Seitenansicht der Dichtung gemäß dem Schnitt II - II der Fig. 1 und

Fig. 3   eine vergrößerte Teilschnittdarstellung der Dichtung gemäß dem Kreisteil III der Fig. 2.

Die in der Zeichnung dargestellte erfindungsgemäße Dichtung 1 ist als Flachdichtung ausgeführt und weist einen inneren Elastomerdichtteil 2 auf, der von einem Kunststoffträgerteil 3 umschlossen ist. Der Elastomerdichtteil 2 ist mit dem Kunststoffträgerteil 3 durch Vulkanisation absolut fest verbunden, so daß auch bei hohen Beanspruchungen während der Montage und im Einbauzustand ein sicherer Materialverbund gewährleistet ist. Der Elastomerdichtteil 2 besteht bevorzugt aus einem gummiartigen Werkstoff und weist eine Härte von etwa 40 bis 90 Shore A auf.

Der den Elastomerdichtteil 2 umschließende Kunststoffträgerteil 3 des vorliegenden Ausführungsbeispiels besitzt einen flachrechteckförmigen Querschnitt mit zwei stirnseitigen Kunststoffanschlagflächen 4, 4′, gegen die die miteinander zu verbindenden Bauteile andrückbar sind. Die Querschnittsbreite des Kunststoffträgerteils 3 in der Ebene der Kunststoffanschlagflächen 4, 4′ ist wesentlich größer als die Dicke in axialer Richtung zwischen den stirnseitigen Kunststoffanschlagflächen 4, 4′. Die Dicke des Kunststoffträgerteils 3 beziehungsweise die Länge der inneren Kunststoffseitenfläche 5 und der äußeren Seitenfläche 6 ist somit wesentlich kürzer, vorzugsweise etwa vier mal kürzer als die Breite. Der Kunststoffträgerteil 3 besitzt ösenartige Vorsprünge 7, in denen je ein Durchgangsloch 8 ausgebildet ist. Durch diese Durchgangslöcher 8 können Schraubenbolzen, Flüssigkeitsleitungen oder dergleichen hindurchgeführt werden.

Als Material für den Kunststoffträgerteil 3 kann ein weitgehend temperaturbeständiger und chemisch resistenter Thermoplastwerkstoff verwendet werden, wobei vorzugsweise Polyamid 6 oder Polyamid 66 zur Anwendung gelangen kann. Darüber hinaus ist es im Rahmen der Erfindung vorteilhaft, den Kunststoffträgerteil 3 aus einem Duroplastwerkstoff herzustellen, wobei insbesondere Polyesterharz, Epoxidharz oder Phenolharz für die Herstellung des Kunststoffträgerteils 3 zum Einsatz gelangen kann. Außerdem kann es günstig sein, den Thermo- oder Duroplastwerkstoff des Kunststoffträgerteils 3 mit einem Füllstoff anzureichern. Der Füllstoffzuschlag kann etwa 10 bis 70 Prozent betragen. Bevorzugt können anorganische Füllstoffe, insbesondere Quarzsand, Quarzmehl, Glasseide, Glasmehl oder Tonerdehydrat, dem Kunststoffwerkstoff hinzugefügt werden. Durch den Füllstoff kann besonders eine Erhöhung der Druckfestigkeit und der Dauertemperaturbeständigkeit erzielt werden.

Der Elastomerdichtteil 2 des vorliegenden Ausführungsbeispiels weist einen Sechskantquerschnitt auf, der in etwa gleich lange Seiten besitzt. In axialer Richtung ist die Länge der Innenwand 9 und der äußeren Umfangsfläche 10 des Elastomerdichtteils 2 gleich der Länge der inneren Kunststoffseitenfläche 5 sowie der äußeren Seitenfläche 6 des Kunststoffträgerteils 3. Die Breite des im Querschnitt sechseckförmigen Elastomerdichtteils 2 zwischen der Innenwand 9 und der Umfangsfläche 10 entspricht in etwa der Dicke des Elastomerdichtteils 2 in axialer Richtung zwischen zwei einander gegenüberliegenden stirnseitigen Dichtlippen 11, 11' und ist wesentlich kleiner als die Breite des Kunststoffträgerteils 3. Es kann jedoch auch zweckmäßig sein, die Breite des Kunststoffträgerteils 3 und die Breite des Elastomerdichtteils 2 im wesentlichen gleich groß auszuführen.

Die Dichtlippe 11, 11' ist aus dem Winkeleckbereich zweier aneinanderstoßender Schrägflächen 12, 12' gebildet, welche die somit dreieckförmige Dichtungsstirnseite 13, 13' des Elastomerdichtteils 2 mitbegrenzen. Die beiden Dichtungsstirnseiten 13, 13' überragen stirnseitig die jeweiligen Kunststoffanschlagflächen 4, 4' des Kunststoffträgerteils 3.

Die Vulkanisationsverbindung 14 besteht bei der vorliegenden erfindungsgemäßen Dichtung 1 an der Umfangsfläche 10 des Elastomerdichtteils 2 und der inneren Kunststoffseitenfläche 5 des Kunststoffträgerteils 3. Die Länge der Vulkanisationsverbindung 14 besteht in axialer Richtung über die gesamte Dicke des Kunststoffträgerteils 3. Für die Vulkanisationsverbindung 14 der beiden die Dichtung 1 bildenden Teile kann es zweckmäßig sein, die innere Kunststoffseitenfläche 5 des Kunststoffträgerteils 3 und/oder die äußere Umfangsfläche 10 des Elastomerdichtteils 2 mechanisch aufzurauhen oder chemisch anzulösen, so daß die Vulkanisationsverbindung 14 eine ausgesprochen hohe Festigkeit besitzt.

Ein wesentlicher Vorteil der erfindungsgemäßen Dichtung 1 besteht darin, daß keine Vor- oder Nachbehandlung der stirnseitigen Oberflächen und der äußeren Seitenfläche des Kunststoffträgerteils 3 erforderlich ist und die Verwendung hochwertiger und teurer Edelstahllegierungen für die Trägerplatten vermieden ist, so daß insgesamt eine sehr kostengünstige Herstellung der als Massenartikel zu bezeichnenden Dichtung 1 möglich ist. Ein weiterer Vorteil besteht darin, daß durch die Dämpfungseigenschaft des erfindungsgemäßen Kunststoffträgerteils 3 ein Antivibrationseffekt erzielt wird und keine Schwingungen verstärkt oder Dröhngeräusche auftreten können. Außerdem kann die erfindungsgemäße Dichtung 1 vorteilhaft auch dort eingesetzt werden, wo eine elektrische Isolation zwischen den beiden miteinander zu verbindenden Bauteilen erforderlich ist. Dabei kann es auch günstig sein, dem Werkstoff des Kunststoffträgerteils 3 zum Beispiel Kupfer-, Aluminium- oder Silberstaub beizumischen, so daß die elektrische Leitfähigkeit des Kunststoffträgerteils 3 erhöht wird. Durch eine genaue Dosierung und einwandfreie Vermischung der leitenden Zusatzstoffe kann die so erzielte elektrische Leitfähigkeit des Kunststoffträgerteils 3 genau den jeweiligen Anforderungen angepaßt und definiert aufrecht erhalten werden.

## Patentansprüche

1. Flachdichtung mit einem Träger (3), der eine Öffnung aufweist, an deren Rand ein Elastomerdichtteil (2) anvulkanisiert ist, der über die beiden Stirnseiten (4, 4') des Trägers (3) ragt und dessen äußere Mantelfläche (10) im wesentlichen gleiche Breite hat wie der Rand (5) der Öffnung, dadurch gekennzeichnet, daß der Elastomerdichtteil (2) an die äußere Mantelfläche (10) anschließende Schrägflächen (12) aufweist, die schräg nach außen über die Stirnseite (4, 4') des aus Kunststoff bestehenden Trägers (3) ragen, und daß der Elastomerdichtteil (2) eine innere, parallel zur äußeren Mantelfläche (10) verlaufende Mantelfläche (9) aufweist, von deren Enden aus zwei weitere Schrägflächen (12, 12') ausgehen, die entgegengesetzt schräg zueinander verlaufen und über die Stirnseiten (4, 4') des Trägers (3) ragen sowie mit den Schrägflächen (12) unter Bildung jeweils einer Dichtlippe (11, 11') einander schneiden.

2. Flachdichtung nach Anspruch 1, dadurch gekennzeichnet, daß der Elastomerdichtteil (2) aus einem gummiartigen Werkstoff mit einer Härte von etwa 40 bis 80 Shore A besteht.

3. Flachdichtung nach Anspruch 1 oder 2, dadurch gekennzeichnet, daß der Träger (3) mit einem bevorzugt anorganischen Füllstoff, inbesondere Quarzsand, Glasseide, Tonerdehydrat, angereichert ist.

4. Flachdichtung nach einem der Ansprüche 1 bis 3, dadurch gekennzeichnet, daß der Träger (3) aus einem temperaturbeständigen Thermoplastwerkstoff, insbesondere Polyamid, oder einem Duroplastwerkstoff, insbesondere Polyesterharz, Epoxidharz, Phenolharz besteht.

5. Flachdichtung nach einem der Ansprüche 1 bis 4, dadurch gekennzeichnet, daß die Vulkanisationsverbindung (14) zwischen dem Träger (3) und dem Elastomerdichtteil (2) durch eine mechanische Aufrauhung bzw. eine chemische Anlösung der Verbindungsfläche des Elastomerdichtteiles (2) und/oder des Trägers (3) mitgebildet ist.

6. Flachdichtung nach einem der Ansprüche 1 bis 5, dadurch gekennzeichnet, daß die Dichtlippen (11, 11') etwa dreieckförmigen Querschnitt haben.

7. Flachdichtung nach einem der Ansprüche 1 bis 6, dadurch gekennzeichnet, daß die radiale Breite des Trägers (3) gleich oder größer als die radiale Breite des Elastomerdichtteiles (2) ist.

8. Flachdichtung nach einem der Ansprüche 1 bis 7, dadurch gekennzeichnet, daß die innere und die äußere Mantelfläche (9, 10) des Elastomerdichtteiles (2) in axialer Richtung im wesentlichen etwa gleich hoch sind.


## Claims

1. Flat seal wich a support (3) which has an opening, at the edge of which an elastomer seal part (2) is vulcanised on and protrudes over the two front faces (4, 4,) of the support (3) and whose outer surface (10) is mainly of the same width as the edge (5) of the opening, characterised in that the elastomer seal part (2) has angled surfaces (12) at its outer surface (10) which protrude at an angle outwards over the front face (4, 4') of the support (3) made of plastic and that the elastomer seal part (2) possesses an internal surface (9) running parallel to the outer surface (10) whereby from the front end two further angled surfaces (12, 12') extend which run at opposite angles to each other and protrude over the front faces (4, 4') of the support (3) and overlap each other with the angled surfaces (12) to form a deal lip (11, 11') in each case.

2. Flat seal according to Claim 1, characterised in that the elastomer seal part (2) consists of a rubbery material with a hardness of approx. 40 to 80 Shore A.

3. Flat seal according to Claim 1 or 2, characterised in that the support (3) is enriched with a preferably inorganic filler, in particular quarts sand, fibreglass, alumina hydrate.

4. Flat seal according to one of Claims 1 to 3, characterised in that the support (3) consists of a temperature-resistant thermoplastic material, in particular polyamide, or a duroplastic material, in particular polyester resin, epoxy resin or phenol resin.

5. Flat seal according to one of Claims 1 to 4, characterised in that the vulcanisation bond (14) between the support (3) and the elastomer seal part (2) is provided by a mechanical roughening or a chemical treatment of the connection surface of the elastomer seal part (2) and/or the support (3).

6. Flat seal according to one of Claims 1 to 5, characterised in that the seal lips (11, 11') have an approximately triangular cross section.

7. Flat seal according to one of Claims 1 to 6, characterised in that the radial width of the support (3) is equal to or greater than the radial width of the elastomer seal part (2).

8. Flat seal according to one of Claims 1 to 7, characterised in that the inner and the outer surfaces (9, 10) of the elastomer seal part (2) are predominantly of equal height in the axial direction.


## Revendications

1. Garniture d'étanchéité plate comportant un support (3) présentant une ouverture sur le bord de laquelle est vulcanisé un élément d'étanchéité en élastomère (2) qui dépasse au-dessus des deux côtés frontaux (4, 4') du support (3) et dont la surface d'enveloppe extérieure (10) a sensiblement la même largeur que le bord (5) de l'ouverture, caractérisée en ce que l'élément d'étanchéité en élastomère (2) comporte des surfaces obliques (12) se raccordant à la surface d'enveloppe extérieure (10), lesquelles dépassent vers l'extérieur au-dessus des côtés frontaux (4, 4') du support (3) en matière plastique, et en ce que l'élément d'étanchéité en élastomère (2) comporte une surface d'enveloppe (9) intérieure parallèle à la surface d'enveloppe extérieure (10), des extrémités de laquelle partent deux autres surfaces obliques (12, 12') qui s'étendent en oblique en sens inverse l'une de l'autre et dépassent au-dessus des côtés frontaux (4, 4') du support (3) et se coupent avec les surfaces obliques (12) en formant chaque fois une lèvre d'étanchéité (11, 11').

2. Garniture d'étanchéité plate selon la revendication 1, caractérisée en ce que l'élément d'étanchéité en élastomère (2) est en un matériau analogue au caoutchouc ayant une dureté comprise environ entre 40 et 80 Shore A.

3. Garniture d'étanchéité plate selon la revendication 1 ou 2, caractérisée en ce que le support (3) est enrichi avec une charge de préférence inorganique, notamment du sable siliceux, de la soie de verre, de l'hydrate d'alumine.

4. Garniture d'étanchéité plate selon l'une des revendications 1 à 3, caractérisée en ce que le support (3) est en un matériau thermoplastique résistant aux températures élevées, notamment en polyamide, ou en un matériau thermodurcissable, notamment une résine de polyester, une résine époxy, une résine phénolique.

5. Garniture d'étanchéité plate selon l'une des revendications 1 à 4, caractérisée en ce que la liaison par vulcanisation (14) entre le support (3) et l'élément d'étanchéité en élastomère (2) est formée en même temps en grattant mécaniquement ou en dissolvant chimiquement la surface de liaison de l'élément d'étanchéité en élastomère (2) et/ou du support (3).

6. Garniture d'étanchéité plate selon l'une des revendications 1 à 5, caractérisée en ce que les lèvres d'étanchéité (11, 11') ont une section transversale sensiblement triangulaire.

7. Garniture d'étanchéité plate selon l'une des revendications 1 à 6, caractérisée en ce que la largeur radiale du support (3) est égale à la largeur radiale de l'élément d'étanchéité en élastomère (2) ou plus grande que celle-ci.

8. Garniture d'étanchéité plate selon l'une des revendications 1 à 7, caractérisée en ce que la surface d'enveloppe intérieure et la surface d'enveloppe extérieure (9,10) de l'élément d'étanchéité en élastomère (2) sont sensiblement de hauteur identique dans le sens axial.

EP 0 179 995 B1

FIG. 1

FIG. 2

FIG. 3